# EUROPEAN PATENT SPECIFICATION

(11) **EP 1 248 824 B1**
(45) Date of publication and mention of the grant of the patent: **02.11.2005**
(21) Application number: 01903062.6
(22) Date of filing: 12.01.2001
(51) Int. Cl.: C09D 11/00

(54) **NOVEL COLORANTS, COLORANT STABILIZERS, INK COMPOSITIONS, AND IMPROVED METHODS OF MAKING THE SAME**
NEUE FARBSTOFFE, STABILISATOREN FÜR FARBSTOFFE, TINTENZUSAMMENSETZUNGEN UND HERSTELLUNGSVERFAHREN DAFÜR
NOUVEAUX COLORANTS, STABILISATEURS DE COLORANTS, COMPOSITIONS D'ENCRE, ET PROCEDES AMELIORES DE PRODUCTION DESDITS PRODUITS

(30) Priority: 12.01.2000 US 175643 P
(43) Date of publication of application: 16.10.2002
(73) Proprietor: NORTH CAROLINA STATE UNIVERSITY, Raleigh, NC 27695-7003 (US)
(72) Inventor: NOHR, Ronald, Sinclair, Alpharetta, GA 30022 (US); MACDONALD, John, Gavin, Decatur, GA 30033 (US)
(74) Representative: Pfau, Anton Konrad
(86) International application number: PCT/US2001/001195
(87) International publication number: WO 2001/051572

(56) References cited:
- US-A- 5 782 963
- US-A- 5 855 655
- US-A- 5 891 229

## Description

The present invention relates to porphines, methods for making porphines, and the use of porphines in ink compositions.

U.S. Patent Application Serial No. 08/757,222 filed November 27, 1996, now U.S. Patent No. 5,782,963; U.S. Patent Application Serial No. 08/788,863 filed January 23, 1997, pending; U.S. Patent Application Serial No. 08/843,410 filed April 15, 1997, now U.S. Patent No. 5,855,655; U.S. Patent Application Serial No. 08/903,911 filed July 31, 1997, now U.S. Patent No. 5,891,229; U.S. Provisional Patent Applications Serial Nos. 60/055,785 filed August 15, 1997, and 60/062,643 filed October 22, 1997; U.S. Patent Application Serial No. 09/133,574 filed August 13, 1998, pending; and U.S. Patent Application Serial No. 09/058,385 filed April 9, 1998, pending; all of which are assigned to Kimberly Clark Worldwide, Inc., disclose the use of a variety of porphines as colorant stabilizers. Porphines disclosed in the above-referenced applications include, but are not limited to, porphines having the following general structure: 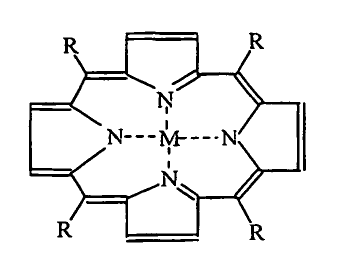 wherein R is any proton-donating moiety and M is iron, cobalt or copper. Desirably, R is SO₃H, 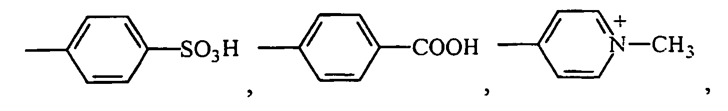 COOH, or R₁ COOH wherein R₁ is an alkyl group of from 1 to 6 carbons. R may also be in its corresponding salt form, such as SO₃Na for SO₃H or 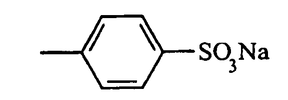 for

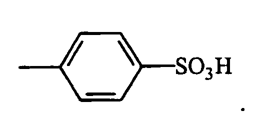

One such porphine is Cu-meso-tetra-(2-sulfanatophenyl)-porphine (designated o-CuTPPS4) having the following structure:

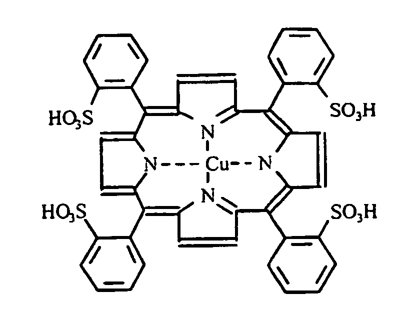

An attempt to make o-CuTPPS4 is disclosed in Treibs et al., Leibigs Ann. Chem., 718, 183, 1998 (hereinafter, "Treibs"). Treibs tried to prepare o-TPPS4 from 2-formylbenzenesulfonic acid, pyrrole, and propionoic acid. However, Treibs could not isolate the resulting product. Treibs reported a yield by GLC analysis of less than about 10 %.

Although porphines provide excellent light stability to colorants, some porphines are relatively unstable and/or tend to "yellow" colorant compositions containing magenta dyes. A more desirable porphine molecule would be one that has at least one of the following characteristics: (1) the porphine molecule has less tendency to "yellow" a colorant composition, (2) the porphine molecule has the ability to make the colorant composition more "blue"; and (3) the porphine molecule, when used as a colorant, has superior lightfastness properties.

Further, while some of the above-described porphines provide excellent stability to one or more colorants associated with the porphines, they do not provide an orange/red color to a composition containing the porphines.

Accordingly, there exists a need in the art for a convenient, low cost, high yield method of making porphines, and compositions containing the porphines. Further, there exists a need for improved porphines, which are capable of providing superior colorant stability while being more stable themselves and without the tendency to "yellow" colorant compositions containing magenta dyes. Finally, there exists a need in the art for a new family of compounds that may be used alone as a colorant or may be used as a colorant stabilizer for one or more colorants associated with the new compounds.

The present invention addresses the needs described above by providing a new family of porphine compounds having the following general formula: 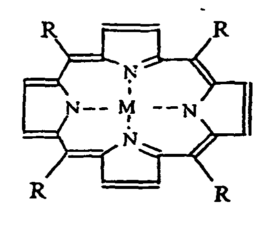 where M is iron, cobalt or copper; R represents a halogenated alkyl group, 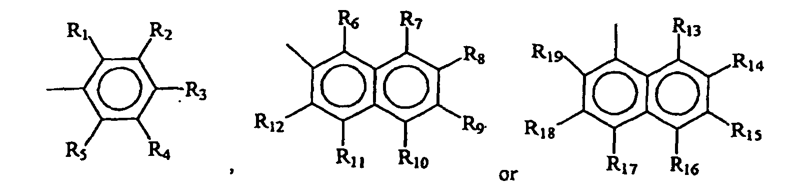 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group.

Preferably, the R₁ to R₁₉ each independently represent -H; a halogen; an alkyl group; a nitrogen-containing group. Even more preferably, R₁ to R₁₉ each independently represent -H; chlorine; bromine; fluorine; iodine; a tert-butyl group; -NO₂ and most preferably, R₁ to R₁₉ each independently represent -H; chlorine; bromine; fluorine; or iodine.
It is further preferred that R represents one or more substituents having at least one atom therein, wherein the at least one atom has a spin-orbit coupling constant greater than about 200 cm-1, preferably greater than about 500 cm-1, even more preferred greater than about 2400 cm-1 and most preferred greater than about 5000 cm-1.

The porphine compounds may be used as a magenta colorant and/or as a colorant stabilizer for other colorants. The new porphine compounds, when used as a colorant stabilizer, do not "yellow" magenta dyes. Consequently, unstable dyes, such as Acid Red 52, do not need to be used to make a magenta composition. The result is a more "blue" magenta color and a higher porphine to dye ratio, which creates superior light stability.

The present invention also addresses the needs described above by providing processes of making the above-described porphines at a lower cost and higher yields.

Thus, the invention relates to a method of making a porphine, said method comprising:
- forming a first reaction mixture of one or more aldehydes, pyrrole, a substituted toluene compound, and a solvent;
- heating the first reaction mixture to form a porphine precursor;
- removing the solvent to yield a precursor precipitate
- mixing the precipitate with propionic acid to form a second reaction mixture
- heating the second reaction mixture at reflux to yield the porphine.

In said method, the one or more aldehydes comprises one or more of 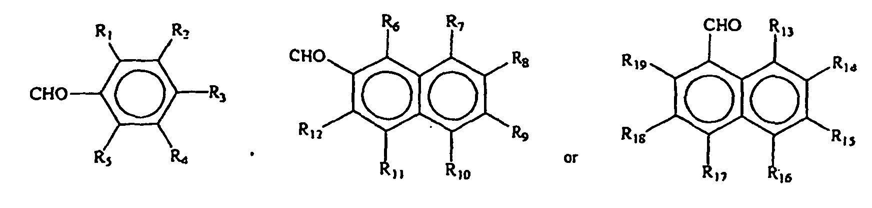 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group.

The solvent used in said method is preferably dimethylformamide, dimethyl sulfoxide, or mixtures thereof. More preferably, the solvent is dimethylformamide.

Preferably, the first reaction mixture is heated at about 150°C for about one hour in an argon atmosphere.

Furthermore, the actual yield of the porphine is preferably greater than about 90%. It is even more preferred that the actual yield of the porphine is about 96%.

It is further preferred that air is bubbled through the second reaction mixture during reflux.

In another preferred embodiment, oxygen is bubbled through the second reaction mixture during reflux.

It is further preferred that the method comprises mixing the porphine with a metal salt to form a porphine compound containing a metal.

The resulting porphines may be used as a colorant stabilizer for a variety of colorants, especially magenta colorants.

The present invention also relates to colorant compositions having improved stability and lightfastness, wherein the colorant is one or more of the new porphine compounds. The invention also relates to the use of the porphine compounds in ink composition and ink sets.

Thus, the present invention relates to an ink composition comprising a porphine as described above

The ink composition further preferably comprises one or more colorants.

As a further preferred embodiment, the composition further comprises at least one metal or metal salt which preferably comprises a lanthanide or lanthanide salt.

The lanthanide or lanthanide salt preferably comprises europium or europium salt.

It is preferred that the composition further comprises a colorant, a molecular includant, a chelating agent, or a combination thereof, whereby a molecular includant is preferred.

The molecular includant is preferably one or more cyclodextrins which preferably comprise α-cyclodextrin, β-cyclodextrin, γ-cyclodextrin, δ-cyclodextrin, hydroxypropyl β-cyclodextrin, or hydroxyethyl β-cyclodextrin.

These and other features and advantages of the present invention will become apparent after a review of the following detailed description of the disclosed embodiments and the appended claims.

The present invention is directed to a new family of porphine compounds having the following general formula: 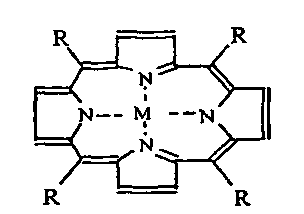 where M is iron, cobalt or copper; R represents a halogenated alkyl group, 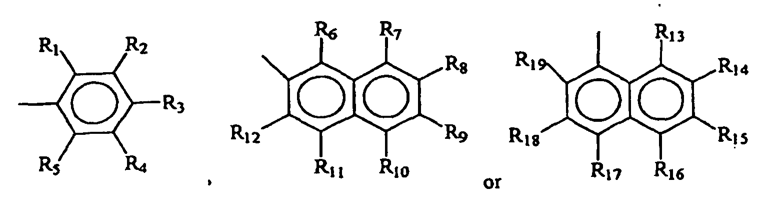 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group. Desirably, R₁ to R₁₉ each independently represent -H; a halogen; an alkyl group; or a nitrogen-containing group. More desirably, R₁ to R₁₉ each independently represent -H; chlorine; bromine; fluorine; iodine; a tert-butyl group; or -NO₂. Even more desirably, R₁ to R₁₉ each independently represent -H; chlorine; bromine; fluorine; or iodine. The new compounds may be used alone as an orange/red colorant or may be used as a colorant stabilizer.

The present invention also relates to colorant compositions having improved stability and lightfastness, wherein the colorant constitutes one or more of the above-described porphine compounds. Desirably, one or more of the new porphine compounds are admixed with a solvent system, as well as other composition components. The porphines may be used alone or in combination with at least one metal or metal salt. Suitable metals and metal salts are disclosed in U.S. Patent No. 5,891,229, assigned to Kimberly Clark Worldwide, Inc.. As an example, the metal or metal salt in a composition can comprise a lanthanide or lanthanide salt. Moreover, a typical lanthanide or lanthanide salt comprises europium or europium salts. Optionally, the new porphine compounds may be associated with a molecular includant, chelating agent, or other material to improve solubility and/or interaction of the porphine compound and other colorants, if present. Suitable molecular includants, chelating agents, and other composition materials are also disclosed in U.S. Patent No. 5,891,229. Typical molecular includants with which the porphines may be associated include one or more cyclodextrins, for example α-cyclodextrin, β-cyclodextrin, γ-cyclodextrin, δ-cyclodextrin, hydroxypropyl β-cyclodextrin, or hydroxyethyl β-cyclodextrin.

When used as a colorant stabilizer, the new porphine compounds may be associated with a variety of dyes or colorants. A suitable dye or colorant, for example, may be an organic dye. Organic dye classes include, by way of illustration only, triarylmethyl dyes, such as Malachite Green Carbinol base {4-(dimethylamino)-α-[4-(dimethylamino)phenyl]-α-phenyl-benzenemethanol}, Malachite Green Carbinol hydrochloride {N-4-[[4-(dimethylamino)phenyl]phenyl-methylene]-2,5-cyclohexyldien-1-ylidene]-N-methyl-methanaminium chloride or bis[*p*-(dimethylamino)phenyl]phenylmethylium chloride}, and Malachite Green oxalate {N-4-[[4-(dimethylamino)-phenyl]-phenylmethylene]-2,5-cyclohexyldien-1-ylidene]-N-methylmethanaminium chloride or bis[*p*-(dimethylamino)-phenyl]phenylmethylium oxalate}; monoazo dyes, such as Cyanine Black, Chrysoidine [Basic Orange 2; 4-(phenylazo)-1,3-benzenediamine monohydrochloride], Victoria Pure Blue BO, Victoria Pure Blue B, basic fuschin and β-Naphthol Orange; thiazine dyes, such as Methylene Green, zinc chloride double salt [3,7-bis(dimethylamino)-6-nitrophenothiazin-5-ium chloride, zinc chloride double salt]; oxazine dyes, such as Lumichrome (7,8-dimethylalloxazine); naphthalimide dyes, such as Lucifer Yellow CH {6-amino-2-[(hydrazino-carbonyl)amino]-2,3-dihydro-1,3-dioxo-1H-benz[de]iso-quinoline-5,8-disulfonic acid dilithium salt}; azine dyes, such as Janus Green B {3-(diethylamino)-7-[[4-(dimethyl-amino)phenyl]azo]-5-phenylphenazinium chloride}; cyanine dyes, such as Indocyanine Green {Cardio-Green or Fox Green; 2-[7-[1,3-dihydro-1,1-dimethyl-3-(4-sulfobutyl)-2H-benz[e]indol-2-ylidene]-1,3,5-heptatrienyl]-1,1-dimethyl-3-(4-sulfobutyl)-1H-benz[e]indolium hydroxide inner salt sodium salt}; indigo dyes, such as Indigo {Indigo Blue or Vat Blue 1; 2-(1,3-dihydro-3-oxo-2H-indol-2-ylidene)-1,2-dihydro-3H-indol-3-one}; coumarin dyes, such as 7-hydroxy-4-methyl-coumarin (4-methylumbelliferone); benzimidazole dyes, such as Hoechst 33258 [bisbenzimide or 2-(4-hydroxyphenyl)-5-(4-methyl-1-piperazinyl)-2,5-bi-1H-benzimidazole trihydro-chloride pentahydrate]; paraquinoidal dyes, such as Hematoxylin {Natural Black 1; 7,11b-dihydrobenz[b]-indeno[1,2-d]pyran-3,4,6a,9,10(6H)-pentol}; fluorescein dyes, such as Fluoresceinamine (5-aminofluorescein); diazonium salt dyes, such as Diazo Red RC (Azoic Diazo No. 10 or Fast Red RC salt; 2-methoxy-5-chlorobenzenediazonium chloride, zinc chloride double salt); azoic diazo dyes, such as Fast Blue BB salt (Azoic Diazo No. 20; 4-benzoylamino-2,5-diethoxybenzene diazonium chloride, zinc chloride double salt); phenylenediamine dyes, such as Disperse Yellow 9 [N-(2,4-dinitrophenyl)-1,4-phenylenediamine or Solvent Orange 53]; diazo dyes, such as Disperse Orange 13 [Solvent Orange 52; 1-phenylazo-4-(4-hydroxyphenylazo)naphthalene]; anthra-quinone dyes, such as Disperse Blue 3 [Celliton Fast Blue FFR; 1-methylamino-4-(2-hydroxyethylamino)-9,10-anthraquinone], Disperse Blue 14 [Celliton Fast Blue B; 1,4-bis(methylamino)-9,10-anthraquinone], and Alizarin Blue Black B (Mordant Black 13); trisazo dyes, such as Direct Blue 71 {Benzo Light Blue FFL or Sirius Light Blue BRR; 3-[(4-[(4-[(6-amino-1-hydroxy-3-sulfo-2-naphthalenyl)azo]-6-sulfo-1-naphthalenyl)-azo]-1-naphthalenyl)azo]-1,5-naphthalenedisulfonic acid tetrasodium salt}; xanthene dyes, such as 2,7-dichloro-fluorescein; proflavine dyes, such as 3,6-diaminoacridine hemisulfate (Proflavine); sulfonaphthalein dyes, such as Cresol Red (o-cresolsulfonaphthalein); phthalocyanine dyes, such as Copper Phthalocyanine {Pigment Blue 15; (SP-4-1)-[29H,31H-phthalocyanato(2-)-N²⁹,N³⁰,N³¹,N³²]copper}; carotenoid dyes, such as trans-β-carotene (Food Orange 5); carminic acid dyes, such as Carmine, the aluminum or calcium-aluminum lake of carminic acid (7-a-D-glucopyranosyl-9,10-dihydro-3,5,6,8-tetrahydroxy-1-methyl-9,10-dioxo-2-anthracene-carbonylic acid); azure dyes, such as Azure A [3-amino-7-(dimethylamino)phenothiazin-5-ium chloride or 7-(dimethylamino)-3-imino-3H-phenothiazine hydrochloride]; and acridine dyes, such as Acridine Orange [Basic Orange 14; 3,8-bis(dimethylamino)acridine hydrochloride, zinc chloride double salt] and Acriflavine (Acriflavine neutral; 3,6-diamino-10-methylacridinium chloride mixture with 3,6-acridine-diamine).

The present invention is further directed to a convenient, fast, low cost, environmental-friendly process of making new porphine compounds. One process of making new porphine compounds proceeds by the following reaction, wherein N,N-dimethylformamide (DMF) is used as the solvent: 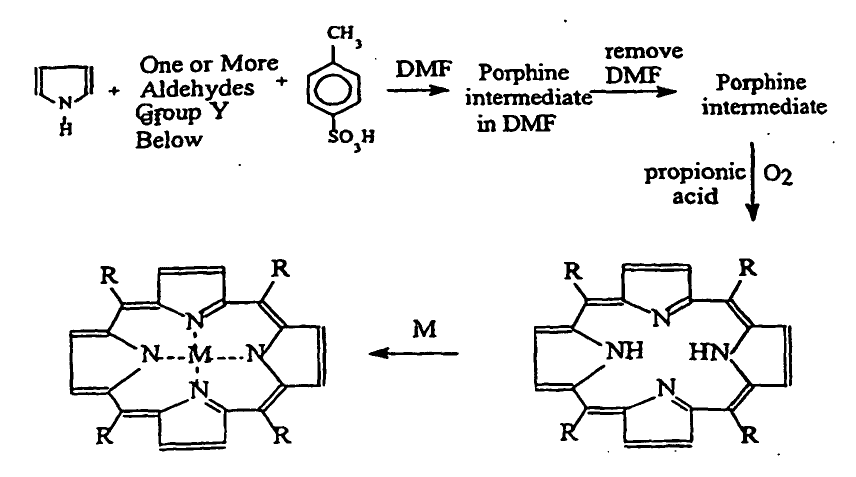 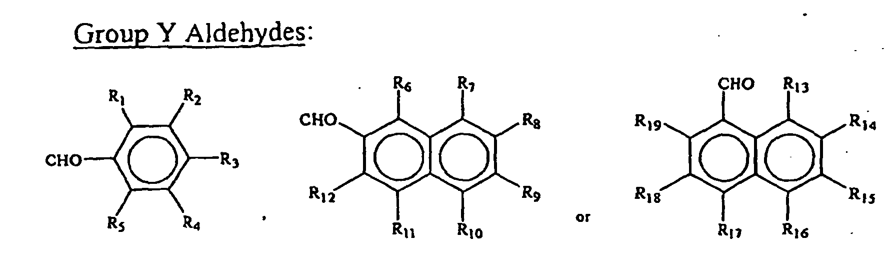 wherein R₁ to R₁₉ are as described above.

The above process produces TPPR4 (i.e., a porphine substituted with "R" groups) at yields of greater than 80%, and as high as about 96 to 97%. The TPPR4 is further reacted with a metal or metal salt, M, as defined above, to produce one of the porphine compounds of the present invention. The latter reaction proceeds at yields of greater than 90%, and as high as about 96 to 97%.

The reaction conditions for the above process may vary. Typically, the reaction may be carried out in a two-step process as follows. The reactants are purified by the following process or a similar purification process. The pyrrole is distilled under argon and a fraction is collected at 130°C. The aldehyde reactant(s) is purified by a Dean and Stark method using benzene as the solvent. The solution is filtered at 60°C and the solid pumped in a vacuum oven overnight at room-temperature. The p-toluene sulfonic acid may also be purified by a Dean and Stark method using benzene as the solvent. It should be noted that a variety of one or more aldehyde reactants may be used in the above-described reaction.

In the first step, the aldehyde, N,N-dimethylformamide (DMF) and pyrrole are placed in a reaction vessel and stirred at room-temperature. The mixture is flushed with argon for about five minutes while stirring prior to heating. The mixture is then heated to 100°C for about ten to twelve minutes. The toluene sulfonic acid dissolved in 15 ml of DMF is injected into the reaction mixture. The reaction mixture is heated to 150°C and held at this temperature for about 50 minutes to form a porphine intermediate. DMF is removed under vacuum from the reaction mixture to yield a precipitate.

In the second step, the porphine intermediate is mixed with propionic acid. Air or oxygen is bubbled through the mixture at reflux for a period of time to yield a finished product. Conversion of the intermediate to the finished product may be monitored using an UV/VIS spectrometer. Reflux time may vary, but usually the reflux time is up to about 10 hours to convert the porphine intermediate to TPPR4. The TPPR4 is further reacted with a metal or metal salt, M, as defined above, to produce one of the porphine compounds of the present invention.

The choice of solvent in the first step of the above process may be any solvent, which enables the efficient production of TPPR4 and the new porphine compounds. Suitable solvents include, but are not limited to, DMF, dimethyl sulfoxide (DMSO), and dimethyl acetamide.

In one embodiment of the present invention, porphine compounds having superior lightfastness properties are produced having the following general formula: 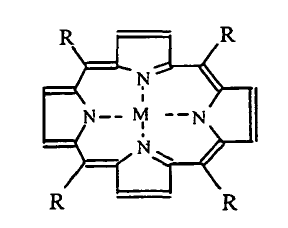 where M is iron, cobalt or copper; and R represents one or more substituents having at least one atom therein, wherein the at least one atom has a spin-orbit coupling constant greater than about 200 cm⁻¹. Suitable atoms having a spin-orbit coupling constant greater than about 200 cm⁻¹ include, but are not limited to, halogens. Desirably, the porphine compound contains at least one substituent having at least one atom therein, wherein the at least one atom has a spin-orbit coupling constant greater than about 500 cm⁻¹. More desirably, the porphine compound contains at least one substituent having at least one atom therein, wherein the at least one atom has a spin-orbit coupling constant greater than about 2400 cm⁻¹. Even more desirably, the porphine compound contains at least one substituent having at least one atom therein, wherein the at least one atom has a spin-orbit coupling constant greater than about 5000 cm⁻¹. In some porphine compounds, there may be a combination of two or more atoms wherein one atom has a spin-orbit coupling constant greater than about 500 cm⁻¹ and another atom has a spin-orbit coupling constant greater than about 5000 cm⁻¹. Any combination of such substituents is considered to be within the scope of the present invention.

It is believed that the above-described porphine compounds of the present invention possess superior lightfastness properties due to their reduced time in the excited state, as well as, their lower probability of being in the excited state. The presence of one or more R groups in the porphine having one or more substituents with high "Z" values (i.e., atomic number) produces the so-called "heavy atom effect" that arises from the coupling of the spin angular momentum and orbital angular momentum. This so-called "spin-orbit coupling", which generally increases with increasing Z values, enhances the rates of normally spin-forbidden electronic transitions, which enables the distribution of vibrational energy at an excited state, resulting from exposure to light, intramolecularly. The "intramolecular quenching" of the molecule results in rapid quenching of the excited state back to the ground state. The net effect being a much smaller concentration of excited state species at any one time. A general discussion of "heavy atom effect" and "spin orbital coupling", as well as values for spin orbit coupling constants, may be found in the Handbook of Photochemistry (Murov et al.), 2^{nd} ed., pages 338-341, 1993, the entirety of which is incorporated herein by reference.

The present invention is further described by the examples which follow. Such examples, however, are not to be construed as limiting in any way either the spirit or scope of the present invention. In the examples, all parts are parts by weight unless stated otherwise.

### EXAMPLE 1

### Preparation of TPPS4 Intermediate

Tetra-(3-sulfanato-4-methoxyphenyl)-porphine (designated TPPS4) was prepared by mixing the following reactants in DMF solvent: pyrrole; 2-methoxy-5-formylbenzene sulfonic acid, sodium salt; and p-toluenesulfonic acid. Prior to mixing the reactants, pyrrole was distilled under an argon atmosphere with the fraction boiling at 130°C collected. The 2-methoxy-5-formylbenzene sulfonic acid, sodium salt (Aldrich) was purified by a Dean and Stark method using benzene as the solvent. The solution was filtered at 60°C and the resulting solid was pumped in a vacuum oven overnight at room-temperature. The DMF (99.9% anhydrous grade available from Aldrich) was used without further purification. The p-toluenesulfonic acid was purified by a Dean and Stark method using benzene as the solvent.

A mixture of 5.0 g of the pyrrole, 15.6 g of the 2-methoxy-5-formylbenzene sulfonic acid, sodium salt, and 200 ml of the DMF was placed into a 500 ml three-necked, round-bottom flask fitted with a magnetic stir bar, condenser, thermometer, and argon gas bubbler inlet. The reaction mixture was flushed with argon for five minutes with stirring prior to heating. The mixture was then heated to 100°C for about 10-12 minutes at which time 0.76 g of p-toluenesulfonic acid was syringed into the reaction mixture. The p-toluenesulfonic acid was dissolved in 15 ml of DMF. The clear, colorless reaction mixture turned red to blood red to brown red to red black in one to two minutes. The reaction mixture was heated to 150°C and held at this temperature for about 50 minutes.

After about 50 minutes at 150°C, the reaction was cooled in an ice bath for about 20 minutes. The DMF was removed under vacuum to yield a precipitate. The wet solid was then placed in a vacuum oven overnight at ambient temperature to dry the solid.

### EXAMPLE 2

### Preparation of TPPS4 in an Argon Atmosphere

Ten grams of the dried powder of Example 1 was mixed with 200 ml of propionic acid in a 500 ml three-necked round-bottom flask. The mixture was heated at reflux in an argon atmosphere. The reaction mixture was monitored by a UV/VIS spectrometer to follow conversion of the TPPS4 intermediate to TPPS4.

The mixture was refluxed for about 67 hours to yield a small amount of TPPS4 having an absorption peak at 412 nm.

### EXAMPLE 3

### Preparation of TPPS4 in an Open Air Condenser

Ten grams of the dried powder of Example 1 was mixed with 200 ml of propionic acid in a 500 ml three-necked round-bottom flask. The mixture was heated at reflux with an open air condenser. The reaction mixture was monitored by a UV/VIS spectrometer to follow conversion of the TPPS4 intermediate to TPPS4.

The mixture was refluxed for about 67 hours. After 10 hours of reflux, conversion to TPPS4 was substantially completed. Full conversion to TPPS4 having an absorption peak at 412 nm was completed at 67 hours.

### EXAMPLE 4

### Preparation of TPPS4 with Air Bubbled Into the Reaction Mixture

Ten grams of the dried powder of Example 1 was mixed with 200 ml of propionic acid in a 500 ml three-necked round-bottom flask. The mixture was heated at reflux while air was bubbled into the reaction mixture. The reaction mixture was monitored by a UV/VIS spectrometer to follow conversion of the TPPS4 intermediate to TPPS4.

The mixture was refluxed for 10 hours. Full conversion to TPPS4 having an absorption peak at 412 nm was completed in 10 hours.

### EXAMPLE 5

### Preparation of CuTPPS4 Colorant Stabilizer

Cu-meso-tetra-(3-sulfanato-4-methoxyphenyl)-porphine (designated CuTPPS4) was prepared by the following reaction. A mixture of 0.31 g of copper powder, 5.0 g of TPPS4 from Example 4, and 50 ml of water were added to a 200 ml round-bottom flask fitted with a condenser and magnetic stirrer bar. The mixture was heated in reflux for three hours. The hot mixture was evaporated down to about 10 ml and chilled. Acetone was added to the mixture. The precipitate was filtered and washed with hexane and toluene. The precipitate was dried under vacuum to yield 3.9 g of a solid. The yield was about 72%.

TLC showed a clean product of CuTPPS4.

### EXAMPLE 6

### Preparation of a Magenta Composition Containing CuTPPS4 As the Colorant

A magenta ink was prepared having the following composition wherein the components are given in weight %:

| **Component** | **Weight %** |
|---|---|
| DI Water | 85.63 |
| Borax | 1.90 |
| HCl (1N) | 1.57 |
| EDTAo2Na | 0.10 |
| CuTPPS4 (Example 5) | 0.50 |
| Ethylene Glycol | 5.00 |
| Glycerine | 5.00 |
| GIV-GARD DXN® | 0.20 |
| COBRATEC® 99 | 0.10 |

The ink was prepared using the following components: deionized water; borax; hydrochloric acid as a buffer/pH adjuster; EDTA or sodium salts thereof as a chelating agent; ethylene glycol and glycerine as wetting agents; GIV-GARD DXN® (Sigma-Aldrich, Milwaukee, WI) as a biocide; COBRATEC® 99 (PMC Industries, Cincinnati, OH) as a corrosion inhibitor; and CuTPPS4 from Example 5 as the dye.

The magenta composition was printed onto a photoglossy medium to produce a light-stable magenta having color gamut with an enhanced blue component.

### EXAMPLE 7

### Preparation of a Magenta Composition Containing CuTPPS4 As a Colorant Stabilizer

A magenta ink was prepared having the following composition wherein the components are given in weight %:

| **Component** | **Weight %** |
|---|---|
| DI Water | 81.54 |
| Borax | 1.90 |
| HCl (1N) | 1.57 |
| EDTAo2Na | 0.10 |
| CuTPPS4 (Example 5) | 0.50 |
| Ethylene Glycol | 5.00 |
| Glycerine | 5.00 |
| GIV-GARD DXN® | 0.20 |
| COBRATEC® 99 | 0.10 |
| Reactive Red 187 | 2.89 |
| Acid Red 52 | 1.20 |

The ink was prepared using the following components: deionized water; borax; hydrochloric acid as a buffer/pH adjuster; EDTA or sodium salts thereof as a chelating agent; ethylene glycol and glycerine as wetting agents; GIV-GARD DXN® (Sigma-Aldrich, Milwaukee, WI) as a biocide; COBRATEC® 99 (PMC Industries, Cincinnati, OH) as a corrosion inhibitor; Reactive Red 187 and Acid Red 52 as dyes; and CuTPPS4 from Example 5 as a colorant stabilizer.

The magenta composition was printed onto a photoglossy medium to produce a light-stable magenta having color gamut with an enhanced blue component.

### EXAMPLE 8

### Preparation of o-TPPS4 Precursor

Tetra-(2-sulfanatophenyl)-porphine (designated o-TPPS4) was prepared from the following reactants in a DMF solvent: pyrrole; 2-formylbenzene sulfonic acid, sodium salt; and p-toluenesulfonic acid. Prior to mixing the reactants, pyrrole was distilled under an argon atmosphere with the fraction boiling at 130°C collected. The 2-formylbenzene sulfonic acid, sodium salt (Aldrich) was purified by a Dean and Stark method using benzene as the solvent. The solution was filtered at 60°C and the resulting solid was pumped in a vacuum oven overnight at room-temperature. The DMF (99.9% anhydrous grade available from Aldrich) was used without further purification. The p-toluenesulfonic acid was purified by a Dean and Stark method using benzene as the solvent.

A mixture of 5.0 g of the pyrrole, 15.6 g of the 2-formylbenzenesulfonic acid, sodium salt, and 200 ml of the DMF was placed into a 500 ml three-necked, round-bottom flask fitted with a magnetic stir bar, condenser, thermometer, and argon gas bubbler inlet. The reaction mixture was flushed with argon for five minutes with stirring prior to heating. The mixture was then heated to 100°C for about 10-12 minutes at which time 0.76 g of p-toluenesulfonic acid was syringed into the reaction mixture. The p-toluenesulfonic acid was dissolved in 15 ml of DMF. The clear, colorless reaction mixture turned red to blood red to brown red to red black in one to two minutes. The reaction mixture was heated to 150°C and held at this temperature for about 50 minutes.

After about 50 minutes at 150°C, the reaction was cooled in an ice bath for about 20 minutes. The DMF was removed to yield a precipitate. The wet solid was then placed in a vacuum oven overnight at ambient temperature to dry the solid.

### EXAMPLE 9

### Preparation of o-TPPS4 in an Argon Atmosphere

Ten grams of the dried powder of Example 8 was mixed with 200 ml of propionic acid in a 500 ml three-necked round-bottom flask. The mixture was heated at reflux in an argon atmosphere. The reaction mixture was monitored by a UV/VIS spectrometer to follow conversion of the o-TPPS4 precursor to o-TPPS4.

The mixture was refluxed for about 67 hours to yield a small amount of o-TPPS4 having an absorption peak at 412 nm.

### EXAMPLE 10

### Preparation of o-TPPS4 in an Open Air Condenser

Ten grams of the dried powder of Example 8 was mixed with 200 ml of propionic acid in a 500 ml three-necked round-bottom flask. The mixture was heated at reflux with an open air condenser. The reaction mixture was monitored by a UV/VIS spectrometer to follow conversion of the o-TPPS4 precursor to o-TPPS4.

The mixture was refluxed for about 67 hours. After 10 hours of reflux, conversion to o-TPPS4 was substantially completed. Full conversion to o-TPPS4 having an absorption peak at 412 nm was completed at 67 hours.

### EXAMPLE 11

### Preparation of o-TPPS4 with Air Bubbled Into the Reaction Mixture

Ten grams of the dried powder of Example 8 was mixed with 200 ml of propionic acid in a 500 ml three-necked round-bottom flask. The mixture was heated at reflux while air was bubbled into the reaction mixture. The reaction mixture was monitored by a UV/VIS spectrometer to follow conversion of the o-TPPS4 precursor to o-TPPS4.

The mixture was refluxed for 10 hours. Full conversion to o-TPPS4 having an absorption peak at 412 nm was completed in 10 hours.

### EXAMPLE 12

### Preparation of o-CuTPPS4 Colorant Stabilizer

Cu-meso-tetra-(2-sulfanatophenyl)-porphine (designated o-CuTPPS4) was prepared by the following reaction. A mixture of 0.31 g of copper powder, 5.0 g of o-TPPS4 from Example 11, and 50 ml of water were added to a 200 ml round-bottom flask fitted with a condenser and magnetic stirrer bar. The mixture was heated in reflux for three hours. The hot mixture was evaporated down to about 10 ml and chilled. Acetone was added to the mixture. The precipitate was filtered and washed with hexane and toluene. The precipitate was dried under vacuum to yield 3.9 g of a solid. The yield was about 72%.

TLC showed a clean product of o-CuTPPS4.

### EXAMPLE 13

### Preparation of a Magenta Composition Containing o-CuTPPS4 Colorant Stabilizer

A magenta ink was prepared having the following composition wherein the components are given in weight %:

| **Component** | **Weight %** |
|---|---|
| DI Water | 81.54 |
| Borax | 1.90 |
| HCl (1N) | 1.57 |
| EDTAo2Na | 0.10 |
| o-CuTPPS4 (Example 12) | 0.50 |
| Ethylene Glycol | 5.00 |
| Glycerine | 5.00 |
| GIV-GARD DXN® | 0.20 |
| COBRATEC® 99 | 0.10 |
| Reactive Red 187 | 2.89 |
| Acid Red 52 | 1.20 |

The ink was prepared using the following components: deionized water; borax; hydrochloric acid as a buffer/pH adjuster; EDTA or sodium salts thereof as a chelating agent; ethylene glycol and glycerine as wetting agents; GIV-GARD DXN® (Sigma-Aldrich, Milwaukee, WI) as a biocide; COBRATEC® 99 (PMC Industries, Cincinnati, OH) as a corrosion inhibitor; Reactive Red 187 and Acid Red 52 as dyes; and o-CuTPPS4 from Example 12 as a colorant stabilizer.

The magenta composition was printed onto a photoglossy medium to produce a light-stable magenta having color gamut with an enhanced blue component.

### EXAMPLE 14

### Preparation of Tetranaphthyl Porphine (TNP)

Tetra-(1-naphthyl) porphine (designated TNP) was prepared from the following reactants in a DMSO solvent: pyrrole and 1-naphthaldehyde. Prior to mixing the reactants, pyrrole was distilled under an argon atmosphere with the fraction boiling at 130°C collected. The 1-naphthaldehyde was distilled under vacuum to purify. A mixture of 6.0 g of pyrrole, 13.7 g of 1-naphthaldehyde, and 120 ml or DMSO were heated at reflux for 2 hours. The reaction solution was cooled and the DMSO solvent partially removed under vacuum. The solid that was present was filtered off and washed with 60 ml of methanol, 60 ml of hot water, and 12 ml of cold methanol. The resulting solid was then dried in a vacuum oven at ambient temperature overnight.

Conversion to TNP was monitored by UV/VIS spectrometry (λₘₐₓ 420 nm). The yield of TNP was about 79%.

### EXAMPLE 15

### Preparation of CuTNP Colorant

The compound Cu-meso-tetra(1-naphthyl)-porphine (designated CuTNP) was prepared by the following reaction. A mixture of 0.24 g of Cu(O₂CCH₃)₂oH₂O, 1 g of TNP from Example 14, and 73 ml of DMF was heated to 120°C for 60 minutes at which time the reaction had changed to reddish in color. The reaction mixture was cooled and poured into 200 ml of ice water, and the resulting mixture was extracted with diethyl ether. After washing the ether with water and drying over MgSO₄, the solvent was removed under vacuum to yield the desired CuTNP. The product was characterized by mass spectrometry (875 M⁺) and UV/VIS spectrometry (λₘₐₓ 420 nm, 540 nm). The yield of CuTNP was 77%.

Having thus described the invention, numerous changes and modifications thereof will be readily apparent to those having ordinary skill in the art, without departing from the spirit or scope of the invention.

## Claims

1. An ink composition comprising a porphine having the following general formula: 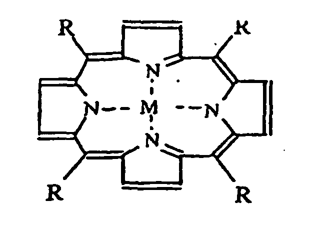 where M is iron, cobalt or copper; R represents a halogenated alkyl group, 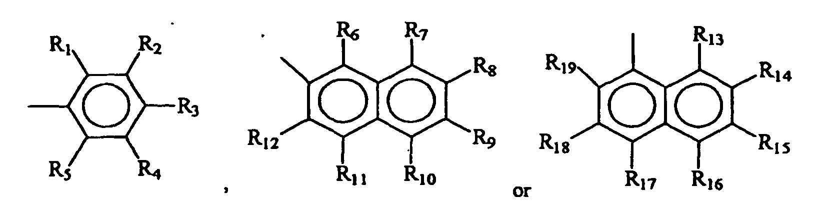 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group.

2. The ink composition of Claim 1, wherein R₁ to R₁₉ each independently represent -H; a halogen; an alkyl group; a nitrogen-containing group.

3. The ink composition of Claim 1, wherein R₁ to R₁₉ each independently represent -H; chlorine; bromine; fluorine; iodine; a tert-butyl group; -NO₂.

4. The ink composition of Claim 1, wherein R₁ to R₁₉ each independently represent -H; chlorine; bromine; fluorine; or iodine.

5. The ink composition of Claim 1, wherein the composition further comprises one or more colorants.

6. The ink composition of Claim 1, wherein the composition further comprises at least one metal or metal salt.

7. The ink composition of Claim 6, wherein the metal or metal salt comprises a lanthanide or lanthanide salt.

8. The ink composition of Claim 7, wherein the lanthanide or lanthanide salt comprises europium or europium salt.

9. The ink composition of Claim 1, wherein the composition further comprises a colorant, a molecular includant, a chelating agent, or a combination thereof.

10. The ink composition of Claim 9, comprising a molecular includant.

11. The ink composition of Claim 10, wherein the molecular includant is one or more cyclodextrins.

12. The ink composition of Claim 11, wherein the one or more cyclodextrins comprise α-cyclodextrin, β-cyclodextrin, γ-cyclodextrin, δ-cyclodextrin, hydroxypropyl β-cyclodextrin, or hydroxyethyl β-cyclodextrin.

13. A porphine compound having the following general formula: 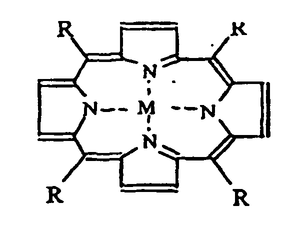 where M is iron, cobalt or copper; R represents a halogenated alkyl group, 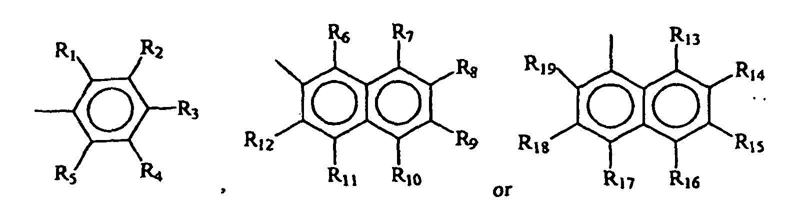 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group.

14. The porphine of Claim 13, wherein R₁ to R₁₉ each independently represent -H; a halogen; an alkyl group; a nitrogen-containing group.

15. The porphine of Claim 13, wherein R₁ to R₁₉ each independently represent -H; chlorine; bromine; fluorine; iodine; a tert-butyl group; -NO₂.

16. The porphine of Claim 13, wherein R₁ to R₁₉ each independently represent -H; chlorine; bromine; fluorine; or iodine.

17. A method of making a porphine, said method comprising:
- forming a first reaction mixture of one or more aldehydes, pyrrole, a substituted toluene compound, and a solvent;
- heating the first reaction mixture to form a porphine precursor;
- removing the solvent to yield a precursor precipitate;
- mixing the precipitate with propionic acid to form a second reaction mixture;
- heating the second reaction mixture at reflux to yield the porphine.

18. The method of claim 17, wherein the one or more aldehydes comprise one or more of 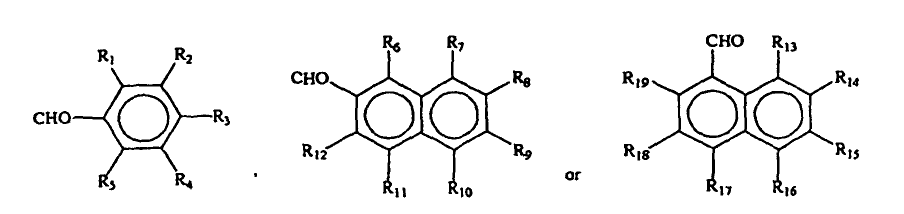 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group.

19. The method of Claim 17, wherein the solvent is dimethylformamide, dimethyl sulfoxide, or mixtures thereof.

20. The method of Claim 19, wherein the solvent is dimethylformamide.

21. The method of Claim 17, wherein the first reaction mixture is heated at about 150°C for about one hour in an argon atmosphere.

22. The method of Claim 17, wherein the actual yield of the porphine is greater than about 90%.

23. The method of Claim 17, wherein the actual yield of the porphine is about 96%.

24. The method of Claim 17, wherein air is bubbled through the second reaction mixture during reflux.

25. The method of Claim 17, wherein oxygen is bubbled through the second reaction mixture during reflux.

26. The method of Claim 17, further comprising mixing the porphine with a metal salt to form a porphine compound containing a metal.

27. The method of Claim 26, wherein the porphine comprises: 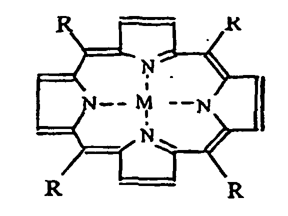 where M is iron, cobalt or copper; R represents a halogenated alkyl group, 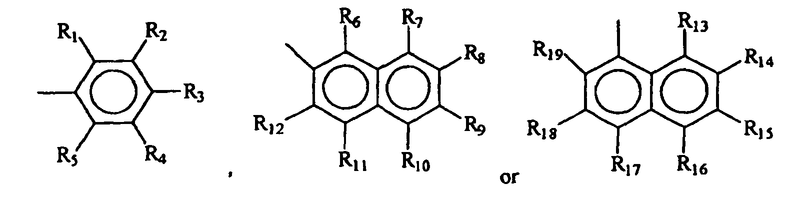 wherein R₁ to R₁₉ each independently represent -H; a halogen; an alkyl group; a substituted alkyl group; an aryl group; a substituted aryl group; an alkoxy group; a nitrogen-containing group; -OR', -NR'R", wherein R' and R" each independently represent an alkyl group, a substituted alkyl group, an aryl group, or a substituted aryl group.

28. A method of light stabilizing a colorant, comprising associating the colorant with the porphine according to Claim 1.

29. A method of making an ink comprising the porphine according to Claim 1.

30. An ink composition comprising at least one porphine according to Claim 1.

31. A porphine compound according to claim 13 having the following general formula: 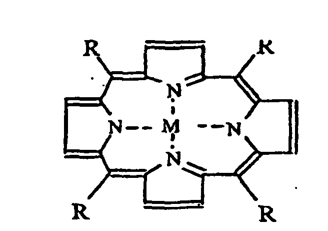 where M is iron, cobalt or copper; and R represents one or more substituents having at least one atom therein, wherein the at least one atom has a spin-orbit coupling constant greater than about 200 cm-1.

32. The porphine compound of Claim 31, wherein the one or more substituents have at least one atom therein with a spin-orbit coupling constant greater than about 500 cm-1.

33. The porphine compound of Claim 31, wherein the one or more substituents have at least one atom therein with a spin-orbit coupling constant greater than about 2400 cm-1.

34. The porphine compound of Claim 31, wherein the one or more substituents have at least one atom therein with a spin-orbit coupling constant greater than about 5000 cm-1.

## Patentansprüche

1. Tintenzusammensetzung, enthaltend ein Porphin der folgenden allgemeinen Formel: 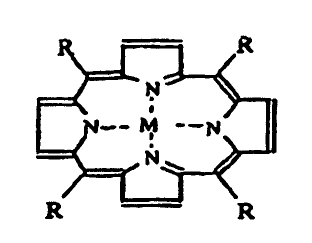 worin M Eisen, Kobalt oder Kupfer ist, R eine halogenierte Alkylgruppe 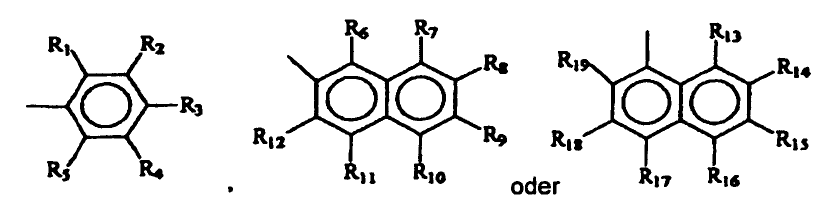 bedeutet, worin R₁ bis R₁₉ jeweils unabhängig -H, ein Halogen, eine Alkylgruppe, eine substituierte Alkylgruppe, eine Arylgruppe, eine substituierte Arylgruppe, eine Alkoxygruppe, eine Stickstoff enthaltende Gruppe, -OR', -NR'R" bedeuten, worin R' und R" jeweils unabhängig eine Alkylgruppe, eine substituierte Alkylgruppe, eine Arylgruppe oder eine substituierte Arylgruppe bedeuten.

2. Tintenzusammensetzung nach Anspruch 1, worin R₁ bis R₁₉ jeweils unabhängig -H, ein Halogen, eine Alkylgruppe, eine Stickstoff enthaltende Gruppe bedeuten.

3. Tintenzusammensetzung nach Anspruch 1, worin R₁ bis R₁₉ jeweils unabhängig -H, Chlor, Brom, Fluor, Iod, eine tert-Butylgruppe, -NO₂ bedeuten.

4. Tintenzusammensetzung nach Anspruch 1, worin R₁ bis R₁₉ jeweils unabhängig -H, Chlor, Brom, Fluor oder Iod bedeuten.

5. Tintenzusammensetzung nach Anspruch 1, worin die Zusammensetzung weiter einen oder mehrere Farbstoffe enthält.

6. Tintenzusammensetzung nach Anspruch 1, worin die Zusammensetzung weiter wenigstens ein Metall oder Metallsalz enthält.

7. Tintenzusammensetzung nach Anspruch 6, worin das Metall oder Metallsalz ein Lanthanid oder Lanthanidsalz umfasst.

8. Tintenzusammensetzung nach Anspruch 7, worin das Lanthanid oder Lanthanidsalz Europium oder Europiumsalz umfasst.

9. Tintenzusammensetzung nach Anspruch 1, worin die Zusammensetzung weiter einen Farbstoff, einen molekularen Zusatz, einen Chelatbildner oder eine Kombination davon enthält.

10. Tintenzusammensetzung nach Anspruch 9, die einen molekularen Zusatz umfasst.

11. Tintenzusammensetzung nach Anspruch 10, worin der molekulare Zusatz ein oder mehrere Cyclodextrin(e) ist.

12. Tintenzusammensetzung nach Anspruch 11, worin das eine oder die mehreren Cyclodextrin(e) α-Cyclodextrin, β-Cyclodextrin, γ-Cyclodextrin, δ-Cyclodextrin, Hydroxypropyl-β-cyclodextrin oder Hydroxyethyl-β-cyclodextrin umfassen.

13. Porphinverbindung der allgemeinen Formel 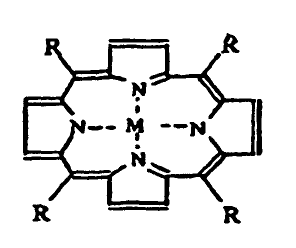 worin M Eisen, Kobalt oder Kupfer ist, R eine halogenierte Alkylgruppe, 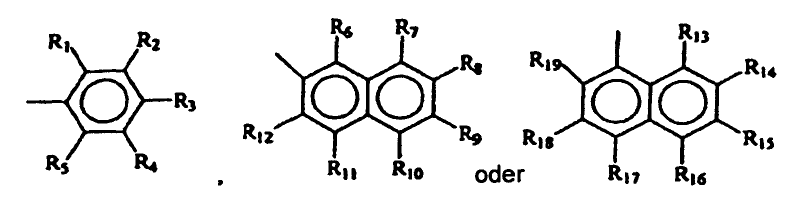 bedeutet, worin R₁ bis R₁₉ jeweils unabhängig -H, ein Halogen, eine Alkylgruppe, eine substituierte Alkylgruppe, eine Arylgruppe, eine substituierte Arylgruppe, eine Alkoxygruppe, eine Stickstoff enthaltende Gruppe, -OR', -NR'R" bedeuten, worin R' und R" jeweils unabhängig eine Alkylgruppe, eine substituierte Alkylgruppe, eine Arylgruppe oder eine substituierte Arylgruppe bedeuten.

14. Porphin nach Anspruch 13, worin R₁ bis R₁₉ jeweils unabhängig -H, ein Halogen, eine Alkylgruppe, eine Stickstoff enthaltende Gruppe bedeuten.

15. Porphin nach Anspruch 13, worin R₁ bis R₁₉ jeweils unabhängig -H, Chlor, Brom, Fluor, Iod, eine tert-Butylgruppe, -NO₂ bedeuten.

16. Porphin nach Anspruch 13, worin R₁ bis R₁₉ jeweils unabhängig -H, Chlor, Brom, Fluor oder lod bedeuten.

17. Verfahren zum Herstellen eines Porphins, wobei das Verfahren umfasst:
- Bilden einer ersten Reaktionsmischung aus einem oder mehreren Aldehyd(en), Pyrrol, einer substituierten Toluolverbindung und einem Lösemittel,
- Erwärmen der ersten Reaktionsmischung zum Bilden eines Porphin-Vorläufers,
- Entfernen des Lösemittels zum Erhalt eines Vorläufer-Niederschlags,
- Vermischen des Niederschlags mit Propionsäure zum Bilden einer zweiten Reaktionsmischung,
- Erwärmen der zweiten Reaktionsmischung auf Rückfluss zum Erhalt des Porphins.

18. Verfahren nach Anspruch 17, worin der eine oder die mehreren Aldehyd(e) eine oder mehrere Substanzen von 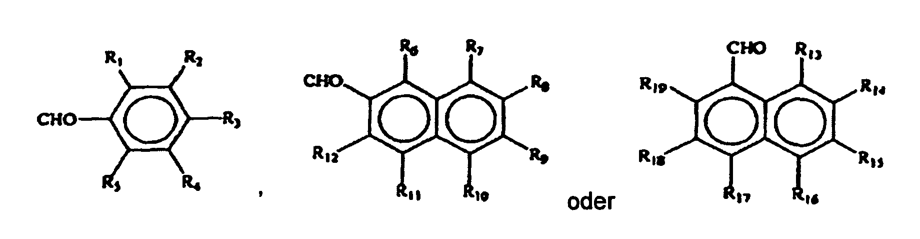 bedeuten, worin R₁ bis R₁₉ jeweils unabhängig -H, ein Halogen, eine Alkylgruppe, eine substituierte Alkylgruppe, eine Arylgruppe, eine substituierte Arylgruppe, eine Alkoxygruppe, eine Stickstoff enthaltende Gruppe, -OR', -NR'R" bedeuten, worin R' und R" jeweils unabhängig eine Alkylgruppe, eine substituierte Alkylgruppe, eine Arylgruppe oder eine substituierte Arylgruppe bedeuten.

19. Verfahren nach Anspruch 17, worin das Lösemittel Dimethylformamid, Dimethylsulfoxid oder Mischungen davon ist.

20. Verfahren nach Anspruch 19, worin das Lösemittel Dimethylformamid ist.

21. Verfahren nach Anspruch 17, worin die erste Reaktionsmischung in einer Argonsatmosphäre etwa 1 Stunde auf etwa 150°C erwärmt wird.

22. Verfahren nach Anspruch 17, worin die tatsächliche Ausbeute des Porphins größer ist als etwa 90 %.

23. Verfahren nach Anspruch 17, worin die tatsächliche Ausbeute des Porphins etwa 96 % beträgt.

24. Verfahren nach Anspruch 17, worin Luft durch die zweite Reaktionsmischung während des Rückflusses durchperlen gelassen wird.

25. Verfahren nach Anspruch 17, worin Sauerstoff durch die zweite Reaktionsmischung währen des Rückflusses durchperlen gelassen wird.

26. Verfahren nach Anspruch 17, welches weiter das Vermischen des Porphins mit einem Metallsalz zum Bilden einer ein Metall enthaltenden Porphinverbindung umfasst.

27. Verfahren nach Anspruch 26, worin das Porphin umfasst: 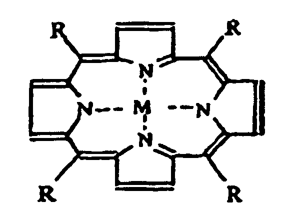 worin M Eisen, Kobalt oder Kupfer ist, R eine halogenierte Alkylgruppe 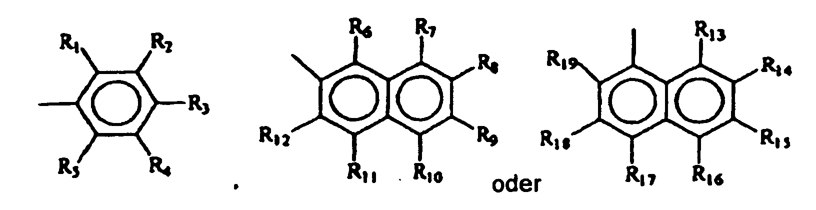 bedeutet, worin R₁ bis R₁₉ jeweils unabhängig -H, ein Halogen, eine Alkylgruppe, eine substituierte Alkylgruppe, eine Arylgruppe, eine substituierte Arylgruppe, eine Alkoxygruppe, eine Stickstoff enthaltende Gruppe, -OR', -NR'R" bedeuten, worin R' und R" jeweils unabhängig eine Alkylgruppe, eine substituierte Alkylgruppe, eine Arylgruppe oder eine substituierte Arylgruppe bedeuten.

28. Verfahren zum Lichtstabilisieren eines Farbstoffs, umfassend das Assoziieren des Farbstoffs mit dem Porphin gemäß Anspruch 1.

29. Verfahren zum Herstellen einer Tinte, umfassend das Porphin gemäß Anspruch 1.

30. Tintenzusammensetzung, umfassend wenigstens ein Porphin gemäß Anspruch 1.

31. Porphinverbindung gemäß Anspruch 13 der folgenden allgemeinen Formel: 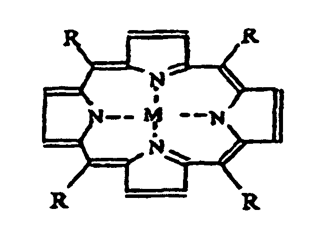 worin M Eisen, Kobalt oder Kupfer ist, und R einen oder mehrere Substituent(en) mit wenigstens einem Atom darin bedeutet, worin das wenigstens eine Atom eine Spin-Bahn-Kopplungskonstante von größer als etwa 200 cm⁻¹ hat.

32. Porphinverbindung nach Anspruch 31, worin der eine oder die mehreren Substituent(en) wenigstens ein Atom darin mit einer Spin-Bahn-Kopplungskonstante von größer als etwa 500 cm⁻¹ haben.

33. Porphinverbindung nach Anspruch 31, worin der eine oder die mehreren Substituent(en) wenigstens ein Atom darin mit einer Spin-Bahn-Kopplungskonstante von größer als etwa 2400 cm⁻¹ haben.

34. Porphinverbindung nach Anspruch 31, worin der eine oder die mehreren Substituent(en) wenigstens ein Atom darin mit einer Spin-Bahn-Kopplungskonstante von größer als etwa 5000 cm⁻¹ haben.

## Revendications

1. Composition d'encre comprenant une porphine ayant la formule générale suivante : 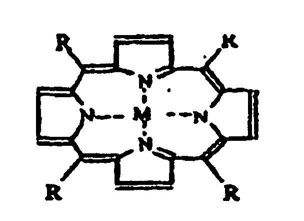 dans laquelle M est le fer, le cobalt ou le cuivre ; R représente un groupe alkyle halogéné, 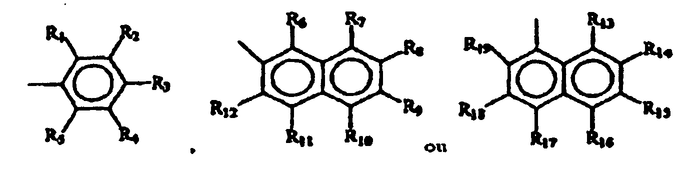 dans lesquelles R₁ à R₁₉ représentent chacun indépendamment -H ; un atome d'halogène ; un groupe alkyle ; un groupe alkyle substitué ; un groupe aryle ; un groupe aryle substitué ; un groupe alcoxy ; un groupe contenant un atome d'azote ; -OR', -NR'R", dans lesquelles R' et R" représentent chacun indépendamment un groupe alkyle, un groupe alkyle substitué, un groupe aryle, ou un groupe aryle substitué.

2. Composition d'encre selon la revendication 1, dans laquelle R₁ à R₁₉ représentent chacun indépendamment -H ; un atome d'halogène ; un groupe alkyle ; un groupe contenant un atome d'azote.

3. Composition d'encre selon la revendication 1, dans laquelle R₁ à R₁₉ représentent chacun indépendamment -H ; un atome de chlore ; un atome de brome ; un atome de fluor ; un atome d'iode ; un groupe tert-butyle ; -NO₂.

4. Composition d'encre selon la revendication 1, dans laquelle R₁ à R₁₉ représentent chacun indépendamment -H ; un atome de chlore ; un atome de brome ; un atome de fluor ; ou un atome d'iode.

5. Composition d'encre selon la revendication 1, dans laquelle la composition comprend en outre un ou plusieurs colorants.

6. Composition d'encre selon la revendication 1, dans laquelle la composition comprend en outre au moins un métal ou un sel métallique.

7. Composition d'encre selon la revendication 6, dans laquelle le métal ou le sel métallique comprend un lanthanide ou un sel de lanthanide.

8. Composition d'encre selon la revendication 7, dans laquelle le lanthanide ou le sel de lanthanide comprend l'europium ou le sel d'europium.

9. Composition d'encre selon la revendication 1, dans laquelle la composition comprend en outre un colorant, un composé d'inclusion moléculaire, un agent chélateur, ou une combinaison de ceux-ci.

10. Composition d'encre selon la revendication 9, comprenant un composé d'inclusion moléculaire.

11. Composition d'encre selon la revendication 10, dans laquelle le composé d'inclusion moléculaire est une ou plusieurs cyclodextrines.

12. Composition d'encre selon la revendication 11, dans laquelle la ou les cyclodextrines comprennent l'α-cyclodextrine, la β-cyclodextrine, la γ-cyclodextrine, la δ-cyclodextrine, l'hydroxypropyl β-cyclodextrine, ou l'hydroxyéthyl β-cyclodextrine.

13. Composé de porphine ayant la formule générale suivante : 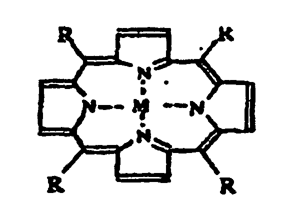 dans laquelle M est le fer, le cobalt ou le cuivre ; R représente un groupe alkyle halogéné, 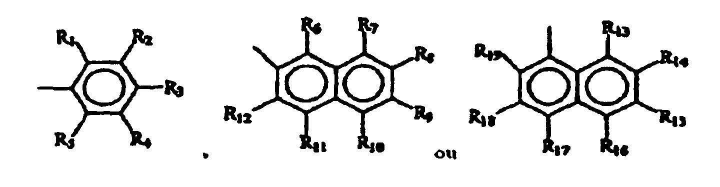 dans lesquelles R₁ à R₁₉ représentent chacun indépendamment -H ; un atome d'halogène ; un groupe alkyle ; un groupe alkyle substitué ; un groupe aryle ; un groupe aryle substitué ; un groupe alcoxy ; un groupe contenant un atome d'azote ; -OR', -NR'R", dans lesquelles R' et R" représentent chacun indépendamment un groupe alkyle, un groupe alkyle substitué, un groupe aryle, ou un groupe aryle substitué.

14. Porphine selon la revendication 13, dans laquelle R₁ à R₁₉ représentent chacun indépendamment -H ; un atome d'halogène ; un groupe alkyle ; un groupe contenant un atome d'azote.

15. Porphine selon la revendication 13, dans laquelle R₁ à R₁₉ représentent chacun indépendamment -H ; un atome de chlore ; un atome de brome ; un atome de fluor ; un atome d'iode ; un groupe tert-butyle ; -NO₂.

16. Porphine selon la revendication 13, dans laquelle R₁ à R₁₉ représentent chacun indépendamment -H ; un atome de chlore ; un atome de brome ; un atome de fluor ; ou un atome d'iode.

17. Procédé de fabrication d'une porphine, ledit procédé comprenant :
- la formation d'un premier mélange réactionnel comprenant un ou plusieurs aldéhydes, un pyrrole, un composé toluène substitué, et un solvant ;
- le chauffage du premier mélange réactionnel pour former un précurseur de la porphine ;
- l'élimination du solvant pour obtenir un précipité du précurseur ;
- le mélange du précipité avec de l'acide propionique pour former un second mélange réactionnel ;
- le chauffage du second mélange réactionnel à reflux pour obtenir la porphine.

18. Procédé selon la revendication 17, dans lequel le ou les aldéhydes comprennent un ou plusieurs de 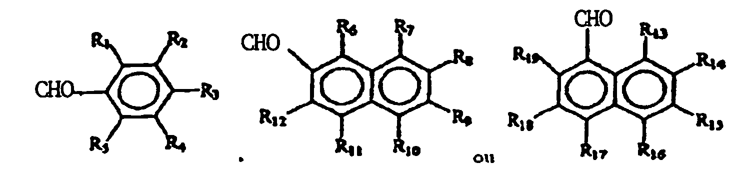 dans lesquelles R₁ à R₁₉ représentent chacun indépendamment -H ; un atome d'halogène ; un groupe alkyle ; un groupe alkyle substitué ; un groupe aryle ; un groupe aryle substitué ; un groupe alcoxy ; un groupe contenant un atome d'azote ; -OR', -NR'R", dans lesquelles R' et R" représentent chacun indépendamment un groupe alkyle, un groupe alkyle substitué, un groupe aryle, ou un groupe aryle substitué.

19. Procédé selon la revendication 17, dans lequel le solvant est le diméthylformamide, le diméthylsulfoxyde, ou des mélanges de ceux-ci.

20. Procédé selon la revendication 19, dans lequel le solvant est le diméthylformamide.

21. Procédé selon la revendication 17, dans lequel le premier mélange réactionnel est chauffé à environ 150°C pendant environ une heure dans une atmosphère d'argon.

22. Procédé selon la revendication 17, dans lequel le véritable rendement de porphine est supérieur à environ 90 %.

23. Procédé selon la revendication 17, dans lequel le véritable rendement de porphine est d'environ 96 %.

24. Procédé selon la revendication 17, dans lequel on fait barboter de l'air dans le second mélange réactionnel durant le reflux.

25. Procédé selon la revendication 17, dans lequel on fait barboter de l'oxygène dans le second mélange réactionnel durant le reflux.

26. Procédé selon la revendication 17, comprenant en outre le mélange de la porphine avec un sel métallique pour former un composé porphine contenant un métal.

27. Procédé selon la revendication 26, dans lequel la porphine comprend : 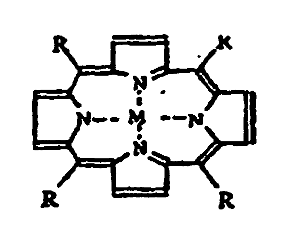 dans laquelle M est le fer, le cobalt ou le cuivre ; R représente un groupe alkyle halogéné, 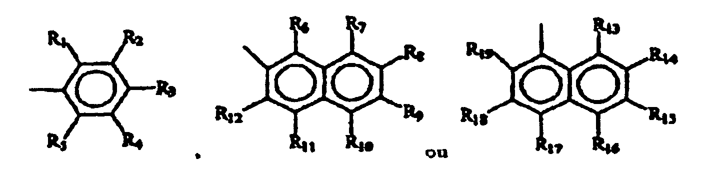 dans lesquelles R₁ à R₁₉ représentent chacun indépendamment -H ; un atome d'halogène ; un groupe alkyle ; un groupe alkyle substitué ; un groupe aryle ; un groupe aryle substitué ; un groupe alcoxy ; un groupe contenant un atome d' azote ; -OR', -NR' R", dans lesquelles R' et R" représentent chacun indépendamment un groupe alkyle, un groupe alkyle substitué, un groupe aryle, ou un groupe aryle substitué.

28. Procédé de photostabilisation d'un colorant, comprenant l'association du colorant avec la porphine selon la revendication 1.

29. Procédé de fabrication d'une encre comprenant la porphine selon la revendication 1.

30. Composition d'encre comprenant au moins une porphine selon la revendication 1.

31. Composé de porphine selon la revendication 13, ayant la formule générale suivante : 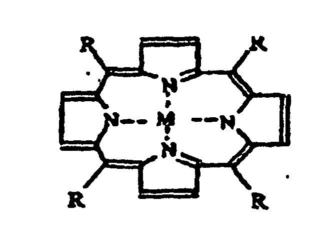 dans laquelle M est le fer, le cobalt ou le cuivre ; et R représente un ou plusieurs substituants contenant au moins un atome, dans laquelle le au moins un atome a une constante de couplage spin-orbite supérieure à environ 200 cm⁻¹.

32. Composé porphine selon la revendication 31, dans lequel le ou les substituants contiennent au moins un atome ayant une constante de couplage spin-orbite supérieure à environ 500 cm⁻¹.

33. Composé porphine selon la revendication 31, dans lequel le ou les substituants contiennent au moins un atome ayant une constante de couplage spin-orbite supérieure à environ 2 400 cm⁻¹.

34. Composé porphine selon la revendication 31, dans lequel le ou les substituants contiennent au moins un atome ayant une constante de couplage spin-orbite supérieure à environ 5 000 cm⁻¹.
